# FASCICULE DE BREVET EUROPEEN

(11) **EP 3 619 077 B1**
(45) Date de publication et mention de la délivrance du brevet: **01.09.2021**
(21) Numéro de dépôt: 18722124.7
(22) Date de dépôt: 06.04.2018
(51) Int. Cl.: B60R 16/02, B62D 65/14, B62D 65/16

(54) **ASSEMBLAGE DE CARROSSERIE DE VÉHICULE**
KAROSSERIEAUFBAU FÜR EIN FAHRZEUG
BODYWORK ASSEMBLY FOR VEHICLE

(30) Priorité: 03.05.2017 FR 1753883
(43) Date de publication de la demande: 11.03.2020
(73) Titulaire: PSA Automobiles SA, 78300 Poissy (FR)
(72) Inventeur: SAGE, Olivier, 70200 Frotey les Lure (FR); BOUXIN CADEMARTORY, Thomas, 90150 Angeot (FR)
(86) Numéro de dépôt international: PCT/FR2018/050868
(87) Numéro de publication internationale: WO 2018/202971

(56) Documents cités:
- WO-A1-2016/042988
- DE-A1-102015 010 578
- JP-A- 2005 225 312

## Description

La présente invention concerne de manière générale un assemblage de carrosserie de véhicule ainsi qu'un véhicule et un procédé de montage.

Il est connu dans l'art antérieur des équipements rapportés emboitables pourvus d'une lumière afin de vérifier que l'emboitement a été correctement réalisé. Le document JP2013115944 décrit le montage d'un tel équipement rapporté.

En contrepartie, ce système présente notamment l'inconvénient de ne pas permettre à un opérateur de montage de positionner correctement l'équipement rapporté à monter lorsque l'opération de montage est réalisée en aveugle, c'est-à-dire sans visibilité de la portion de paroi de véhicule recevant l'équipement rapporté. Ainsi, lorsque l'équipement rapporté doit être monté dans un endroit peu accessible, par exemple sous un toit ou dans un recoin de châssis de véhicule, l'opérateur doit tâtonner sans visibilité pour trouver la bonne position de l'élément à monter et/ou adopter une posture inconfortable afin de voir comment positionner l'équipement rapporté.

En outre, le document WO 2016/042988 A1 décrit un assemblage de carrosserie selon le préambule de la revendication 1.

Un but de la présente invention est de répondre à l'inconvénient du document de l'art antérieur mentionné ci-dessus et en particulier, de proposer un assemblage de carrosserie de véhicule qui permette un montage en aveugle facilité d'un équipement rapporté et dans une position confortable pour un opérateur de montage.

Un but supplémentaire de la présente invention est de permettre le montage en aveugle d'un équipement rapporté sur un assemblage de carrosserie sans perte de temps liée aux tâtonnements de l'opérateur ni perte de qualité liée à des équipements rapportés mal fixés.

Pour cela un premier aspect de l'invention concerne un assemblage de carrosserie, comprenant :
- une première portion de paroi de véhicule,
- au moins un élément de fixation, positionné sur la dite première portion de paroi et agencé pour fixer un équipement rapporté sur ladite première portion de paroi,
- une deuxième portion de paroi de véhicule,
la deuxième portion de paroi comprenant au moins un indicateur visuel ou tactile agencé dans une position indicative de la position de l'élément de fixation, l'assemblage étant caractérisé en ce qu'il comprend en outre au moins un élément de fixation intermédiaire agencé pour être monté sur l'au moins un élément de fixation et pour fixer l'équipement rapporté sur ladite première portion de paroi de véhicule, l'équipement étant rapporté sur la première portion à l'au moins un élément de fixation dans la position indiquée par l'indicateur.

Un tel assemblage de carrosserie permet de fixer en aveugle un équipement rapporté, tel qu'un élément de faisceau électrique, une conduite de fluide ou un élément d'habitacle, dans un endroit peu accessible à un opérateur de montage sans que celui-ci ne doive adopter une position inconfortable, sans tâtonnement et avec un haut niveau de qualité. En effet, l'au moins un indicateur indique à l'opérateur comment positionner l'équipement rapporté sur la première portion de paroi de véhicule de façon à engager l'au moins un élément de fixation non visible et ainsi fixer facilement l'équipement rapporté à la première portion de paroi de véhicule, ce qui résulte en un gain de productivité et de confort pour l'opérateur de montage. L'au moins un élément de fixation intermédiaire est conçu pour être complémentaire de l'élément de fixation et comprend une portion fixable ou fixée sur l'équipement rapporté. Ainsi, tout type d'équipement rapporté peut être fixé en aveugle sur l'assemblage de carrosserie de façon productive et confortable.

Selon l'invention, l'assemblage de carrosserie comprend en outre au moins un élément de fixation intermédiaire agencé pour être monté sur l'au moins un élément de fixation et pour fixer l'équipement rapporté sur ladite première portion de paroi de véhicule.

Avantageusement, la première portion de paroi et la deuxième portion de paroi de véhicule sont des portions d'au moins une paroi, de deux parois différentes ou de deux faces d'une même paroi du véhicule et un axe longitudinal de la première portion de paroi est parallèle à un axe longitudinal de la deuxième portion de paroi. Ainsi, l'au moins un indicateur est aligné avec l'au moins un élément de fixation selon un axe orthogonal aux deux axes longitudinaux, ce qui facilite le repérage de l'élément de fixation par l'opérateur de montage et rend le montage ou la fixation plus intuitif.

Avantageusement, l'au moins un indicateur et l'au moins un élément de fixation sont alignés selon un axe longitudinal du véhicule ou un axe transversal, ce qui rend le montage en aveugle de l'équipement rapporté encore plus aisé.

De manière avantageuse, l'au moins un indicateur est choisi parmi : une encoche, un relief, une texture, une marque colorée, une marque luminescente.

De manière spécialement avantageuse, l'au moins un indicateur est visible uniquement dans des conditions spécifiques de lumière, par exemple choisies parmi : une lumière rasante, une lumière noire et une lumière de forte intensité. De ce fait, l'au moins un indicateur n'est visible que sur une chaîne de montage et quasiment invisible lors de l'utilisation normale du véhicule.

Avantageusement, l'élément de fixation est choisi parmi : une cavité, une patte, un filetage, une pince et un clip. Ainsi, l'élément de fixation peut recevoir facilement un élément de fixation intermédiaire, solidaire de l'équipement rapporté ou pouvant le recevoir.

De manière spécialement avantageuse, l'élément de fixation est une cavité, la première portion de paroi est une paroi de traverse arrière de pavillon, la deuxième portion de paroi est une paroi de doublure de hayon de véhicule, l'au moins un indicateur est une encoche, et l'assemblage de carrosserie comprend l'équipement rapporté qui forme un élément de faisceau électrique pourvu d'au moins un élément intermédiaire comprenant un embout à pied sapin destiné à être accueilli dans ladite cavité.

En outre, un équipement rapporté fixé à ladite première portion de paroi de l'assemblage de carrosserie selon le premier aspect de l'invention peut être choisi parmi un élément de faisceau électrique, une garniture d'habitacle, un coffret de rangement, un élément électrique ou électronique ou encore une conduite de fluide telle que du carburant, du fluide réfrigérant, du liquide lave-glace ou de l'air.

Avantageusement, ladite première portion de paroi de véhicule est située entre l'équipement rapporté et ladite deuxième portion de paroi.

Un second aspect de l'invention est un véhicule comprenant un assemblage de carrosserie selon le premier aspect de l'invention.

Un troisième aspect de l'invention est un procédé de montage d'un équipement rapporté à une première portion de paroi de véhicule comprenant au moins un élément de fixation, ledit procédé comprenant les étapes de :
- repérer au moins un indicateur visuel ou tactile agencé sur une deuxième portion de paroi de véhicule dans une position indicative de la position de l'élément de fixation,
- positionner en aveugle l'équipement rapporté face à la première portion de paroi de véhicule qui comprend ledit au moins un élément de fixation,
- fixer l'équipement rapporté sur la première portion de paroi à l'au moins un élément de fixation dans la position indiquée par l'indicateur.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue arrière tridimensionnelle en contre plongée d'un véhicule comprenant un assemblage de carrosserie selon la présente invention,
- la figure 2 représente un schéma de principe d'une opération de montage d'un équipement rapporté sur un assemblage de carrosserie selon la figure 1,
- la figure 3 représente une vue détaillée en perspective d'un assemblage de carrosserie selon la figure 1 après l'opération de montage de la figure 2.

De manière générale, la présente invention concerne un assemblage de carrosserie de véhicule visant à améliorer la productivité et le confort d'un opérateur durant une opération de montage, c'est-à-dire permettant le montage de l'équipement rapporté dans une posture naturelle et habituelle comme une posture debout ou une posture assise. À l'inverse, les postures inconfortables comme des postures obliques, couchées, semi-couchées, sur les genoux ou de trois quarts sont évitées ou fortement réduites par la présente invention.

De plus, l'opération de montage est faite en aveugle, c'est-à-dire que l'opérateur de montage ne peut pas voir une portion de paroi de véhicule et/ou un élément de fixation de la portion de paroi quand il monte l'équipement rapporté à ladite portion de paroi de véhicule.

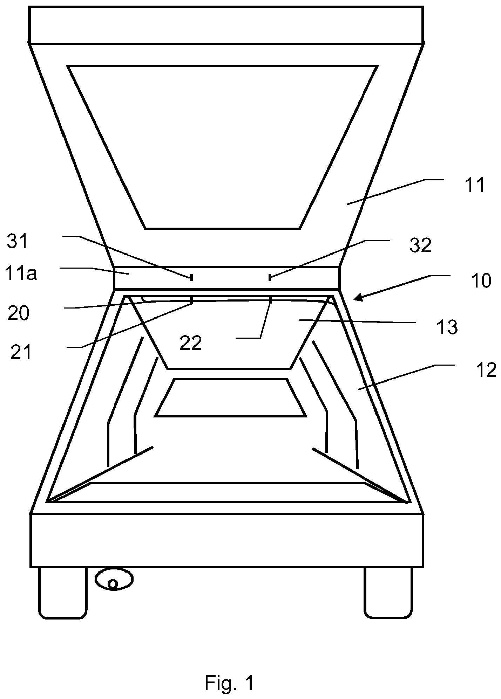

La figure 1 représente une vue arrière schématique de l'arrière d'un véhicule 10 en cours de montage sur une chaîne de fabrication. Le hayon du véhicule 11 ou porte de coffre est ouvert laissant apparaître l'habitacle 12 en cours de montage ainsi que le pavillon 13. Entre le pavillon 13 et le hayon de véhicule 11 est fixé un équipement rapporté 20 qui forme par exemple un élément de faisceau électrique destiné à alimenter en électricité le système de dégivrage de la lunette arrière ainsi que commander les éléments de signalisation arrière, tels que les feux clignotants, les feux-stops et les feux arrière.

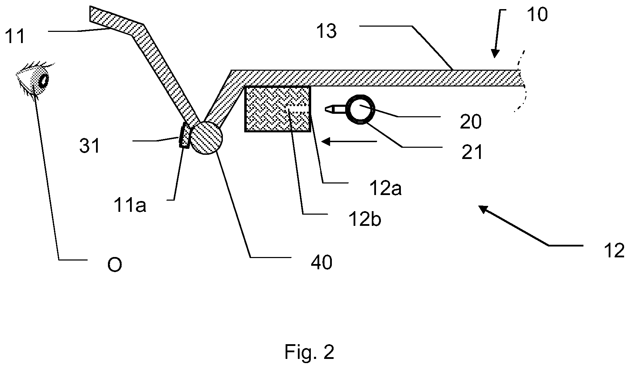

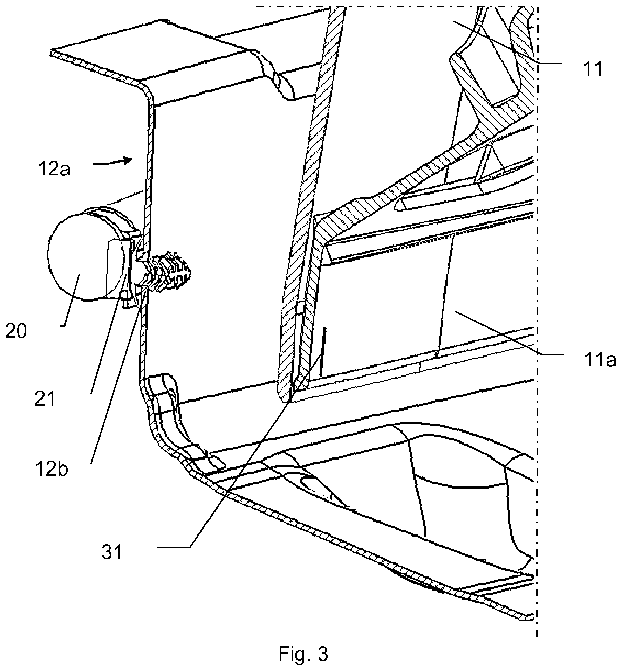

L'équipement rapporté 20 est pourvu de deux éléments de fixation intermédiaire 21 et 22 sous la forme de colliers de serrage munis chacun d'un embout conique ou à pied sapin, c'est-à-dire d'un embout de forme complémentaire à un élément de fixation 12b telle qu'une cavité positionnée sur ou dans une première portion de paroi 12a de véhicule et destinée à le recevoir (voir les figures 2 et 3). Cette première portion de paroi 12a est une paroi d'une traverse arrière de pavillon ou bien une paroi intermédiaire située derrière un traverse arrière de véhicule 10 et n'est pas visible pour un opérateur se tenant debout et voyant de derrière le véhicule 10 tel que représenté sur la figure 1.

Le hayon de véhicule 11 comprend une deuxième portion de paroi 11a de véhicule sous la forme d'une paroi de hayon ou doublure de hayon pourvue de deux indicateurs 31 et 32 sous la forme de deux encoches visibles par un opérateur se tenant debout face à l'arrière du véhicule tel que représenté sur la figure 1. Ces encoches sont placées dans une position en regard opposé, c'est à dire correspondante avec les éléments de fixation (voir la figure 2) et donc indicative de la position des éléments de fixation. De plus, ces encoches sont également en vis-à-vis opposé ou en regard opposé des éléments de fixation intermédiaire 21 et 22. Une position correspondante est un alignement entre un opérateur de montage, un indicateur et un élément de fixation, ici parallèle à un axe longitudinal du véhicule. Ainsi, les deux indicateurs 31 et 32 indiquent à un opérateur de montage à quels endroits sont situés les éléments de fixation de la première portion de paroi et donc où disposer les éléments de fixation intermédiaire 21 et 22 de l'équipement rapporté 20 sans devoir se pencher ou passer la tête à l'intérieur de l'habitacle 12 de véhicule.

La figure 2 représente une opération de montage en aveugle de l'équipement rapporté 20 c'est-à-dire l'élément de faisceau électrique, à la première portion de paroi 12a de l'habitacle 12. Ainsi, la deuxième portion de paroi 11a est disposée à proximité d'une charnière 40 de hayon de véhicule 11 et la première portion de paroi 12a est disposée entre la deuxième portion de paroi 11a et l'équipement rapporté 20. Un opérateur de montage, représenté par son œil O ne peut pas voir la première portion de paroi 12a sans se baisser ou passer la tête dans l'habitacle 12 de véhicule et va donc approcher l'équipement rapporté 20 en aveugle, sans voir cette première portion de paroi 12a. Il voit cependant l'indicateur 31 sur la deuxième portion de paroi 11a préalablement positionnée et peut donc positionner correctement en aveugle l'élément de fixation intermédiaire 21 de l'équipement rapporté 20 dans l'élément de fixation 12b de la première portion de paroi 12a selon la flèche visible sur la figure 2. La première portion de paroi 12a, la deuxième portion de paroi 11a, l'élément de fixation 12b et les indicateurs 31 et 32 constituent donc un assemblage de carrosserie pour un véhicule permettant de réaliser une opération de montage en aveugle de l'équipement rapporté 20 confortablement et avec une qualité et une productivité optimale.

La figure 3 représente une vue détaillée d'un équipement rapporté 20 sous la forme d'un élément de faisceau électrique monté sur la première portion de paroi 12a grâce à un élément intermédiaire 21 sous la forme d'une bague comprenant un embout conique ou à pied sapin introduit dans un élément de fixation 12b sous la forme d'une cavité dans la première portion de paroi 12a. Ainsi, l'élément intermédiaire 21, l'élément de fixation 12b et l'indicateur 31 visible sur la deuxième portion de paroi 11a sont alignés selon un axe parallèle à un axe longitudinal du véhicule.

On comprendra que diverses modifications et/ou améliorations évidentes pour l'homme du métier peuvent être apportées aux différents modes de réalisation de l'invention décrits dans la présente description sans sortir du cadre de l'invention. En particulier, il est fait référence aux indicateurs 31 et 32 qui peuvent être tout type d'indicateur tactile ou préférentiellement visuel, tel qu'une encoche, un relief, une texture, une marque colorée ou une marque luminescente, intégré à la deuxième portion de paroi ou détachable de la deuxième portion de paroi. En outre, un indicateur peut être visible uniquement dans des conditions de lumières spécifiques, telles qu'une lumière noire, une lumière rasante ou une lumière de forte intensité. Ainsi, un indicateur peut être visible uniquement sur une chaîne de montage et donc rester invisible pour un client final. De plus, le nombre d'indicateurs n'est pas limité à deux, mais comprend le nombre nécessaire pour fixer tous les éléments de véhicule requis pour le montage complet de chaque équipement rapporté 10.

L'élément de fixation 12b n'est pas limité à une cavité, mais comprend tout type d'élément de fixation tel qu'une patte, un filetage, une pince et un clip. De même, l'élément de fixation intermédiaire 21 ou 22 n'est pas limité à un ensemble collier de serrage et embout conique tel que représenté sur la figure 2, mais comprend tout type d'élément de fixation intermédiaire comportant un embout complémentaire à un élément de fixation afin de réaliser une fixation par glissement, emboitement ou clippage.

Par ailleurs, l'équipement rapporté 20 à monter en aveugle n'est pas limité à un élément de faisceau électrique, mais peut comprendre tout type d'équipement rapporté tel qu'une garniture d'habitacle, un coffret de rangement, un élément électrique ou électronique ou encore une conduite de fluide telle que du carburant, du fluide réfrigérant, du liquide lave-glace ou de l'air. En addition, l'équipement rapporté n'est pas nécessairement solidaire de l'élément de fixation intermédiaire, mais peut être pourvu séparément, auquel cas les indicateurs servent à la fois à positionner les éléments de fixation intermédiaire sur la première portion de paroi de véhicule et à positionner l'équipement rapporté sur les éléments de fixation intermédiaire.

Enfin, les portions de parois de véhicule selon la présente invention ne sont pas limitées à des parois d'un habitacle de véhicule, mais peuvent être des portions de parois d'une même face ou d'une même paroi, ou bien des faces ou des parois différentes d'un habitacle, d'un châssis ou d'un compartiment moteur de véhicule. En outre, la première portion de paroi 12a n'est pas nécessairement parallèle à la deuxième portion de paroi 11a et les indicateurs 31 et 32 ne sont pas nécessairement placés en regard opposé, c'est-à-dire en vis-à-vis opposé des éléments de fixation intermédiaire 21 et 22, mais peuvent être situés sur deux axes non parallèles, par exemple des axes orthogonaux afin d'indiquer une profondeur sur un axe horizontal grâce à une hauteur sur un axe vertical.

## Revendications

1. Assemblage de carrosserie, comprenant :
• une première portion de paroi (12a) de véhicule,
• au moins un élément de fixation (12b), positionné sur ladite première portion de paroi (12a) et agencé pour fixer un équipement rapporté (20) sur ladite première portion de paroi (12a),
• une deuxième portion de paroi (11a) de véhicule, la deuxième portion de paroi (11a) comprenant au moins
un indicateur (31,32) visuel ou tactile agencé dans une position indicative de la position de l'élément de fixation (12b), l'assemblage étant **caractérisé en ce qu'**il comprend en outre au moins un élément de fixation intermédiaire (21,22) agencé pour être monté sur l'au moins un élément de fixation (12b) et pour fixer l'équipement rapporté (20) sur ladite première portion de paroi (12a) de véhicule, l'équipement étant rapporté sur la première portion à l'au moins un élément de fixation dans la position indiquée par l'indicateur.

2. Assemblage de carrosserie selon l'une quelconque des revendications précédentes, **caractérisé en ce qu'**un axe longitudinal de la première portion de paroi (12a) est parallèle à un axe longitudinal de la deuxième portion de paroi (11a).

3. Assemblage de carrosserie selon l'une quelconque des revendications précédentes, **caractérisé en ce que** l'au moins un indicateur (31,32) et l'au moins un élément de fixation (12b) sont alignés selon un axe longitudinal du véhicule.

4. Assemblage de carrosserie selon l'une quelconque des revendications précédentes, **caractérisé en ce que** l'au moins un indicateur (31,32) est visible uniquement dans des conditions spécifiques de lumière par exemple choisies parmi : une lumière rasante, une lumière noire et une lumière de forte intensité.

5. Assemblage de carrosserie selon l'une quelconque des revendications précédentes, **caractérisé en ce que** l'élément de fixation (12b) est choisi parmi : une cavité, une patte, un filetage, une pince et un clip.

6. Assemblage de carrosserie selon la revendication précédente, **caractérisé en ce que** l'élément de fixation (12b) est une cavité, **en ce que** la première portion de paroi (12a) est une paroi de traverse arrière de pavillon, **en ce que** la deuxième portion de paroi (11a) est une paroi de doublure de hayon de véhicule (11), **en ce que** l'au moins un indicateur (31,32) est une encoche, et **en ce que** l'assemblage de carrosserie comprend l'équipement rapporté (20) qui forme un élément de faisceau électrique pourvu d'au moins un élément intermédiaire (21,22) comprenant un embout à pied sapin destiné à être accueilli dans ladite cavité.

7. Assemblage de carrosserie selon la revendication précédente, dans lequel ladite première portion de paroi (12a) de véhicule est située entre l'équipement rapporté (20) et ladite deuxième portion de paroi (11a).

8. Véhicule (10) comprenant un assemblage de carrosserie selon l'une quelconque des revendications précédentes.

9. Procédé de montage d'un équipement rapporté (20) à une première portion de paroi (12a) de véhicule comprenant au moins un élément de fixation (12b), ledit procédé comprenant les étapes de :
• repérer au moins un indicateur (31,32) visuel ou tactile agencé sur une deuxième portion de paroi (11a) de véhicule dans une position indicative de la position de l'élément de fixation (12b),
• positionner en aveugle l'équipement rapporté (20) face à la première portion de paroi (12a) de véhicule qui comprend ledit au moins un élément de fixation (12b),
• fixer l'équipement rapporté (20) sur la première portion de paroi (12a) à l'au moins un élément de fixation dans la position indiquée par l'indicateur (31,32).

## Patentansprüche

1. Karosseriebaugruppe, bestehend aus:
- einem ersten Wandabschnitt (12a) eines Fahrzeugs,
- mindestens einem Befestigungselement (12b), das auf dem ersten Wandabschnitt (12a) positioniert und zum Befestigen eines Anbaugerätes (20) an dem ersten Wandabschnitt (12a) angeordnet ist,
- einem zweiten Wandabschnitt (11a) eines Fahrzeugs, wobei der zweite Wandabschnitt (11a) mindestens eine optische oder taktile Anzeige (31, 32) umfasst, die in einer Position angeordnet ist, die die Position des Befestigungselements (12b) anzeigt,
Anordnung, **dadurch gekennzeichnet, dass** sie ferner mindestens ein Zwischenbefestigungselement (21, 22) umfasst, das so angeordnet ist, dass es an dem mindestens einem Befestigungselement (12b) befestigt werden kann und die aufgesetzte Ausrüstung (20) an dem ersten Wandabschnitt (12a) des Fahrzeugs befestigt wird, wobei die Ausrüstung an dem ersten Abschnitt an dem mindestens einem Befestigungselement in der durch die Anzeige angegebenen Position angebracht wird.

2. Karosserieanordnung nach einem der vorhergehenden Ansprüche, **dadurch gekennzeichnet, dass** eine Längsachse des ersten Wandabschnitts (12a) parallel zu einer Längsachse des zweiten Wandabschnitts (11a) ist.

3. Karosseriebaugruppe nach einem der vorhergehenden Ansprüche, **dadurch gekennzeichnet, dass** der mindestens eine Anzeiger (31, 32) und das mindestens eine Befestigungselement (12b) entlang einer Längsachse des Fahrzeugs ausgerichtet sind.

4. Karosseriebaugruppe nach einem der vorhergehenden Ansprüche, **dadurch gekennzeichnet, dass** der mindestens eine Indikator (31, 32) nur unter bestimmten Lichtbedingungen sichtbar ist, beispielsweise ausgewählt aus: Rasierendes Licht, schwarzes Licht und starkes Licht.

5. Karosserieanordnung nach einem der vorhergehenden Ansprüche, **dadurch gekennzeichnet, dass** das Befestigungselement (12b) ausgewählt ist aus: einen Hohlraum, eine Lasche, ein Gewinde, eine Klammer und einen Clip.

6. Karosseriebaugruppe nach dem vorhergehenden Anspruch, **dadurch gekennzeichnet, dass** das Befestigungselement (12b) ein Hohlraum ist, dass der erste Wandabschnitt (12a) eine hintere Dachquerwand ist, dass der zweite Wandabschnitt (11a) eine Fahrzeugheckklappenauskleidungswand (11) ist, dass der mindestens eine Indikator (31, 32) eine Kerbe ist, und dass die Karosseriebaugruppe die Anbaugruppe (20) umfasst, die ein elektrisches Bündelelement bildet, das mit mindestens einem Zwischenelement (2) versehen ist 1, 22) mit einem Tannenfußansatz zur Aufnahme in dem Hohlraum.

7. Karosseriebaugruppe nach dem vorhergehenden Anspruch, bei der der erste Wandabschnitt (12a) des Fahrzeugs zwischen dem Einsatz (20) und dem zweiten Wandabschnitt (11a) angeordnet ist.

8. Fahrzeug (10) mit einer Karosserieanordnung nach einem der vorhergehenden Ansprüche.

9. Verfahren zum Montieren eines Anbaugerätes (20) an einem ersten Wandabschnitt (12a) eines Fahrzeugs, das mindestens ein Befestigungselement (12b) umfasst, wobei das Verfahren die folgenden Schritte umfasst:
- an einem zweiten Wandabschnitt (11a) des Fahrzeugs in einer die Position des Befestigungselements (12b) anzeigenden Position mindestens eine visuelle oder taktile Anzeige (31, 32) zu markieren,
- Blindpositionieren des Anbaugerätes (20) gegenüber dem ersten Fahrzeugwandabschnitt (12a), der das mindestens eine Befestigungselement (12b) umfasst;
- Befestigen des Anbaugerätes (20) am ersten Wandabschnitt (12a) an dem mindestens einen Befestigungselement in der durch die Anzeigeeinrichtung (31, 32) angegebenen Position.

## Claims

1. Body assembly, comprising:
- a first portion of vehicle wall (12a),
- at least one fastening element (12b), positioned on said first wall portion (12a) and arranged to attach a reported equipment (20) to said first wall portion (12a),
- a second portion of vehicle wall (11a) means the second portion of wall (11a) comprising at least one visual or tactile indicator (31, 32) arranged in an indicative position of the position of the attachment member (12b),
the assembly being **characterized in that** it further comprises at least one intermediate attachment element (21, 22) arranged to be mounted on at least one attachment element (12b) and to secure the equipment reported (20) on said first portion of the vehicle wall (12a), the equipment being reported on the first portion to at least one attachment element in the position indicated by the indicator.

2. Body assembly according to any of the preceding claims, **characterized in that** a longitudinal axis of the first wall portion (12a) is parallel to a longitudinal axis of the second wall portion (11a).

3. Body assembly according to any of the preceding claims, **characterized in that** at least one indicator (31, 32) and at least one attachment element (12b) are aligned along a longitudinal axis of the vehicle.

4. Body assembly according to any one of the preceding claims, **characterized in that** at least one indicator (31, 32) is visible only under specific light conditions such as selected from: a shimmering light, a black light and a high intensity light.

5. Body assembly according to any of the preceding claims, **characterized in that** the attachment element (12b) is chosen from: a cavity, a leg, a thread, a clip and a clip.

6. Body assembly according to the preceding claim, **characterized by** the fact that the attachment element (12b) is a cavity, in that the first portion of wall (12a) is a pavilion rear cross-section wall, in that the second portion of wall (11a) is a vehicle tailgate lining wall (11), in that at least one indicator (31, 32) is a notch, and in that the bodywork assembly includes the equipment reported (20) which forms an electrical beam element with at least one intermediate element (21, 22) comprising a fir-footed end intended to be accommodated in that cavity.

7. Body assembly according to the preceding claim, in which said first part of wall (12a) of vehicle is located between the equipment reported (20) and said second part of wall (11a).

8. Vehicle (10) comprising a body assembly according to any of the preceding claims.

9. Procedure for fitting equipment (20) to a first part of a vehicle wall (12a) comprising at least one attachment (12b), the said procedure comprising the steps of:
- identify at least one visual or tactile indicator (31, 32) on a second part of the wall (11a) of a vehicle in an indicative position of the position of the attachment (12b),
- blind positioning of the returned equipment (20) in front of the first part of the wall (12a) of the vehicle which includes at least one attachment (12b),
- affix the returned equipment (20) on the first portion of wall (12a) to at least one attachment in the position indicated by the indicator (31, 32).
